Europäisches Patentamt

**(19)** European Patent Office

Office européen des brevets

**(11)** Publication number : **0 403 562 B1**

## EUROPEAN PATENT SPECIFICATION

**(12)**

**(45)** Date of publication of patent specification :
07.09.94 Bulletin 94/36

**(51)** Int. Cl.$^5$ : **G09B 9/00**

**(21)** Application number : **89904173.5**

**(22)** Date of filing : **13.03.89**

**(86)** International application number :
**PCT/GB89/00257**

**(87)** International publication number :
**WO 89/08905 21.09.89 Gazette 89/23**

**(54)** TRAINING AID TO SIMULATE DETECTION OF RADIOACTIVITY.

**(30)** Priority : **12.03.88 GB 8805926**
**27.09.88 GB 8822683**

**(43)** Date of publication of application :
**27.12.90 Bulletin 90/52**

**(45)** Publication of the grant of the patent :
**07.09.94 Bulletin 94/36**

**(84)** Designated Contracting States :
**AT BE CH DE FR GB IT LI LU NL SE**

**(56)** References cited :
US-A- 3 636 641
US-E- 027 078
Navy Technical Disclosure Bulletin, vol. 8, no.
2, December 1982, (Washington, US), A.H. Mar-
shall : "Alpha field radiation survey trainer",
pages 61-64

**(73)** Proprietor : **PIKE, Steven Derek**
**Unit 16, Ribocon Way,**
**Progress Business Park**
**Luton LU4 9UR (GB)**

**(72)** Inventor : **PIKE, Steven Derek**
**Unit 16, Ribocon Way,**
**Progress Business Park**
**Luton LU4 9UR (GB)**

**(74)** Representative : **Archer, Philip Bruce et al**
**Urquhart-Dykes & Lord,**
**Midsummer House,**
**411C Midsummer Boulevard**
**Central Milton Keynes, Bucks. MK9 3BN (GB)**

## Description

This invention relates to a training aid to simulate a radioactive source and detector of radioactivity. Such a simulator enables individuals to be trained in the use of equipment capable of measuring the strength of, and locating, a radioactive source without the need to expose those individuals to any of the hazards generally associated with radiation.

Background Prior Art

US-4,500,295 of Insinger III et al, assigned to the US Navy Secretary, discloses a simulated radiation source and compatible detector for training purposes relative to contamination by alpha radiation. The detector comprises a strain gauge mounted to a soft plate or permanent magnet to respond to flexing when in the proximity of a magnet which is simulating the source of radiation. The output from the strain gauge provides the basis of an electronic indication of the field strength of the simulated radiation. The specification also mentions an earlier suggestion to simulate radioactivity by the use of radio waves, a suggestion dismissed as uneconomic because of the costs of providing the required radio transmitters, and the conflict between the dispersed nature of a typical radioactive source and the precise location of each radio transmitter.

Further, US-A- 3 636 641 which is the basis for the preambles of claims 1 and 21 discloses a simulated radiation source that emits sound.

SUMMARY OF THE INVENTION

According to a first aspect of the present invention the training aid comprises a source of air-borne ultrasonic radiation and a detector of said ultrasonic radiation, which detector comprises transducer means to convert air-borne ultrasonic radiation incident thereon into an electrical signal, an amplifier of said electrical signal which provides an output which varies with the field strength of the incident radiation and an output element which generates an audible or visual signal to indicate said field strength.

Hitherto, practical applications of ultrasound have involved its propagation through liquids and solids, because its propagation in air is very poor. It is however, this very attenuation in air which can be used to achieve a more convincing simulation of radioactive emissions than is achievable with the previous proposals. Individual ultrasonic sources can be made small and cheap, and arrays of them (as described below) can mimic a dispersed source of radioactivity. Relatively low ultrasonic frequencies (30kHz) propagate in air with less directionality than the higher frequencies, and so imitate radioactive emissions more closely. For this reason alone they are preferred in the present application.

In a second aspect, the invention provides a method of developing safety procedures against radioactivity which involves the use of equipment to simulate radioactive emission and detection, in which the equipment is ultrasonic equipment. The detected ultrasonic signals can be integrated to provide useful information about "doses" of radiation received, leading for example to modifications in working practices calculated to minimise the amount of radiation liable to be received in the course of repairing an accidental radiation leak.

In some embodiments of the present invention, the training aid comprises a source of safe radiation, and a detector of said safe radiation which comprises transducer means to convert radiation incident thereon into an electrical signal, a logarithmic amplifier responsive to said signal, which amplifier provides as output an amplified signal which varies with the field of strength of the said incident radiation, and an output element which generates an audible or visual signal to indicate said field strength.

The strength of radiation emitted omnidirectionally from any point source falls off with the square of the distance from the, source. By using a logarithmic amplifier the sensor delivers an output which varies with distance from the source less sharply than does the strength of the radiation incident on the sensor.

The preferred simulation radiation source emits a high amplitude ultrasonic signal. The preferred range of frequency of this signal is 25 to 33 kHz, which is well above human hearing. Other ultrasonic frequencies (such as in a range of from 20 to 40 kHz) can be used but higher frequencies will give a more directional sound pattern i.e. a less than omni-directional pattern. A further problem with higher frequencies is that free space loss increases with increasing frequency, thus reducing the effective range of the system. Reducing the frequency raises a potential problem, however, in that it would then come within the range of hearing of dogs, and this may well result in unpredictable behaviour. In ambient air at temperature of 21°C and a pressure of $10^5$Pa, a sound pressure level at a distance of 0.30m from the face of the source of at least 50dB is generally required , and more preferably at least, 120 dB. This would be above the threshold of pain if it were within the frequency range of human hearing.

When a probe is used in simulated decontamination exercises, it must not actually touch the suspect contaminant. (This is of course because the probe itself will then be contaminated and rendered useless.) Optionally, therefore, the probe contains a device which detects physical contact, or close proximity, of the probe and the source. The latter is preferable from a training point of view since it is better to train the user to "hover" the probe in close proximity to the suspect contaminent. The preferred method of detecting this close proximity over a wide range of substances and colours is a proximity detector which operates by analysis of reflected infra-red light.

Proximity and touch detection devices per se are well-known. In the present application of such devices, the output of the device preferably drives an audible and/or visual device to indicate a possible contamination of the probe. Preferably, means to disable this sensor are incorporated. To facilitate covert use by an instructor, a means of disabling any audible indication of proximity is desirable.

To simulate radioactive fall-out, and the ground-originating alpha and beta radiation associated with it, using an ultrasonically simulated source, the detector can be modified by incorporating a ranging device which causes the detector to show a zero or minimal level of received radiation when the detection probe is more than a predetermined minimum distance, say, 0.08m from the ground, or the source.

There are a number of methods for measuring distance, any of which may be utilised. The preferred method is to use an ultrasound ranging system.

The frequency of a preferred such system is different from the frequency used for any ultrasonic simulation of the radioactivity. The system operates by emitting a pulse of sound towards the ground. An internal timer measures how long it takes for the echo to bounce back from the ground. This data is used to calculate the height of the measuring probe above ground. The result obtained is then be used to modify the reading of the radiation sensor, as follows.

If the probe is close to the ground then the indicator is caused to display the appropriate level of contamination. As the probe is raised further above the ground the reading of radioactivity level is modified such that it decreases with increasing height until reading either very low or zero irrespective of the strength of the simulated radioactivity incident on the sensor.

Other forms of simulation which require some other form of signal reading modification related to distance from contaminant and probe angle are possible.

Real fall-out probes show a reduced reading unless held correctly with respect to the contaminated area. This is conveniently (and optionally) simulated by a device within the simulation probe which detects incorrect probe presentation. The preferred device is a tilt switch which, when activated, modifies the reading so as to reduce it or increase it as appropriate.

In many training situations there will be a need to deploy several simulated sources in close proximity to each other. When these are sources of ultrasonic radiation, the radiation emitted from the different sources will overlap. Various techniques can be used to avoid interference patterns, and the consequent fluctuations in the radiation field strength received by the detector of simulated radiation. One way is to offset the final frequency of the emitted signal such that a beat or heterodyne signal cannot be registered by the indicating device on the receiver. A further method is to modulate the frequency of each source in a random fashion so as to ensure that the chance of phase addition or cancellation is negligible. The source may also be randomly pulsed on and off in an effort to achieve the desired effect. Whatever technique is used, any number of individual signal sources must not be allowed to create a very low frequency heterodyne when placed within the vicinity of each other's field of simulated radiation.

Should the source be generated by a low stability oscillator then it is unlikely that heterodyne or heat problems will be encountered. Nevertheless, high stability offset sources permit greater control and so are preferred.

One preferred method is to use a random or pseudo random noise signal and present this to the source transducer at a high level.

Gamma radiation is highly penetrative. Equipment which convincingly simulates sensing of it therefore should be omni-directional. A single ultrasonic sensor is highly directional. Thus, ultrasonic simulation of gamma radiation is likely to be more convincing if more than one sensor is utilised.

An omni-directional behaviour can be simulated by arranging the receiving devices in an array so as to widen their field of view. The specific pattern of this array would be chosen having regard to the particular way in which the unit being simulated is used. Simulation of some instruments requires an array in the horizontal plane whilst others require an array which is effective in both the horizontal and vertical planes.

An alternative is to employ one receiving device which has an omni-directional characteristic but any such device will tend to be less sensitive than its directional counterpart.

A preferred configuration is with devices spread in a horizontal plane throughout a 180° arc. Electronic compensation to balance the signal received by each device can be included. An advantage of not offering a full 360° field of view is that, if the receiving equipment is arranged to be less sensitive in the direction facing the user, a signal coming from behind the user will read as a weaker signal than if that user were to face the same signal. This behaviour simulates the tendency of the user's body to absorb radiation.

To mount the sensor array on a weighted pendulum helps to maintain the array properly horizontal. An extra sensor arranged to look downwardly from the base of a horizontally stabilised sensor array serves to simulate the detection of ground-contaminating fall-out which generates beta radiation.

Convincing simulation depends on successful calibration of the simulator.

A preferred method to achieve this is through conversion of the incoming analogue into a digital signal. A successive approximation analogue-to-digital converter may be used. With a resolution of this converter of 8 bits then, for any one range of input, the output may be represented by up to 256 discrete digital levels.

The digital output of the converter is used to address a memory device, and preferably the device is a CMOS device.

The content of each memory location within the device is presented at the data output of the device as each respective location is addressed. The 8 bit output (8 bits being the preferred resolution) of the memory device is presented to a digital-to-analogue converter. The analogue output of the digital-to-analogue converter is therefore dependent on the content of a specific memory location, the memory location itself being dependent on the analogue signal presented to the analogue-to-digital converter.

The position of the indicator on the display, or the value indicated on the display, can therefore be determined by the data programmed into the memory device. Thus, the indicating device can be calibrated to suit the specific application and hence allow a more accurate simulation of the genuine equipment. From a production point of view, the meter or indicator drive circuit can be configured for any choice of sensing device.

The contents of the memory device are determined empirically, as in the following illustration by reference to an analogue meter.

Assuming the chosen meter has a scale comprising a 120° arc, the scale can be represented by digital increments of:

$$120/256 = 0.469°$$

This resolution is satisfactory. To mark the scale, the input signal is initially removed and a memory emulator or suitable device is used temporarily to replace the memory. Initial values are set to force the meter to read zero. The input signal is then applied and varied as each successive memory location is modified to obtain the desired meter reading. This process is repeated until the meter scale changes accurately with respect to changing distance between simulation source and the simulation geiger counter. Once satisfactory memory values have been obtained they may be stored and used for production of multiple copies.

Providing the analogue-to-digital converter, memory device and digital-to-analogue converter within a single part, which includes an intelligent section such as a microprocessor, is now possible.

An alternative method of analogue-to-digital conversion is to measure the frequency or periodic output of a voltage-to-frequency converter, since this is representative of the value of the analogue input.

To minimise power requirements, the most energy efficient devices should be used, preferably CMOS.

For further savings of power consumption, power may be applied for very short periods of time, typically three times a second. The input signal is sampled, and the indicating device updated during the short sample period, and this yields a significant saving in power consumption and hence prolonged battery life.

Experiments with an ultrasound simulator have revealed that accurate and repeatable readings with good inverse square law response can be obtained by evaluating the true root mean square of the incoming signal, converting this to a D.C. level and applying it to the (preferably logarithmic) amplifier.

Preferably any analogue meter employed should have a low drive current demand, even for full scale deflection, and a relatively low impedance.

Besides providing training in the use of radiation detectors, the present invention can provide training for activity in contaminated areas, by facilitating integration of received radiation to indicate received "dosages" of simulated radioactivity.

A system of panels of ultrasound emitters is proposed, each emitter being independently controllable in respect of output level and or frequency.

Each such panel is mounted to a structure with simulated radio-active contamination. This can be a dummy structure of, for example, a pump within a nuclear reactor. The output level of each panel is then set to simulate the level of radioactivity present at each location on the model.

The required output levels having been set, they are stored within the system controller. The drive signal to each panel is multiplexed such that at any one time only one emitter is producing an output. A measuring probe connected to the control system reads the emitted signal and passes it to the control system. The control system saves this data and notes the emitter from which the signal came. The process repeats until all panels had been read.

Alternatively, each panel is driven at a different frequency and a wide band-width receiving device is used. Each signal is filtered before being processed.

The received data is then analysed, to compute the effective level for radiated contamination at each point. The process then repeats itself, storing successive computed levels to build up a profile of the contamination model.

A measuring probe of suitable size can be attached to a human subject, for example, an engineer carrying out a typical maintenance task. The collated data could then be used as the basis of proposals to modify working practices and hence reduce real received radiation doses.

DESCRIPTION OF THE PREFERRED EMBODIMENTS

Reference is now made, by way of example, to the accompanying drawings, in which:

FIGURES 1 and 2 together constitute a circuit diagram for a preferred embodiment of single sensor radiation sensor simulator;

FIGURE 3 is a circuit diagram for a preferred radiation source simulator;

FIGURE 4 is a perspective view of the sensor simulator;

FIGURE 5 is a side view of a first embodiment of source simulator; and

FIGURE 6 is a plan view from above, and a side view, of a second embodiment of source simulator.

FIGURE 7 is a block diagram of a modification to part of the circuit of Figure 2;

FIGURE 8 is a block diagram of a set of emitting transducers under computer control via a multiplexer; and

FIGURE 9 is a block diagram of a set of emitting transducers under computer control via individual oscillators.

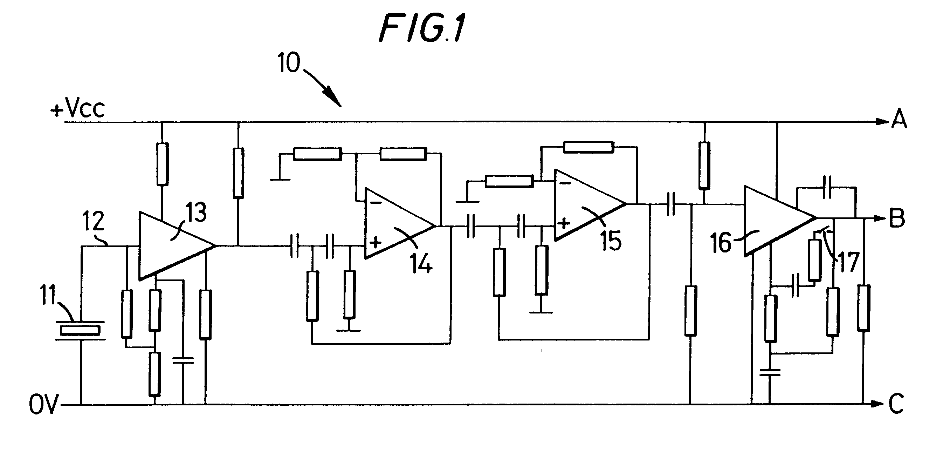

The radiation sensor 10 of Figure 1 is essentially a sensitive low noise receiver. The sensing element 11 is a piezo-electric transducer. Any transducer capable of converting acoustic energy at this frequency to electrical energy (for example, a microphone or an electret condenser) may be used but at this time the piezo-device is the most sensitive type available. The transducer 11 is coupled to the input 12 of a first amplifier stage 13 which provides a high impedance across the transducer, amplification of the signal at the input 12, a small amount of high pass filtering and a low impedance drive for a filter 14. High pass filtering is desirable to eliminate the effects of ambient noise and handling noise, which can give rise to false or inaccurate readings on the meter.

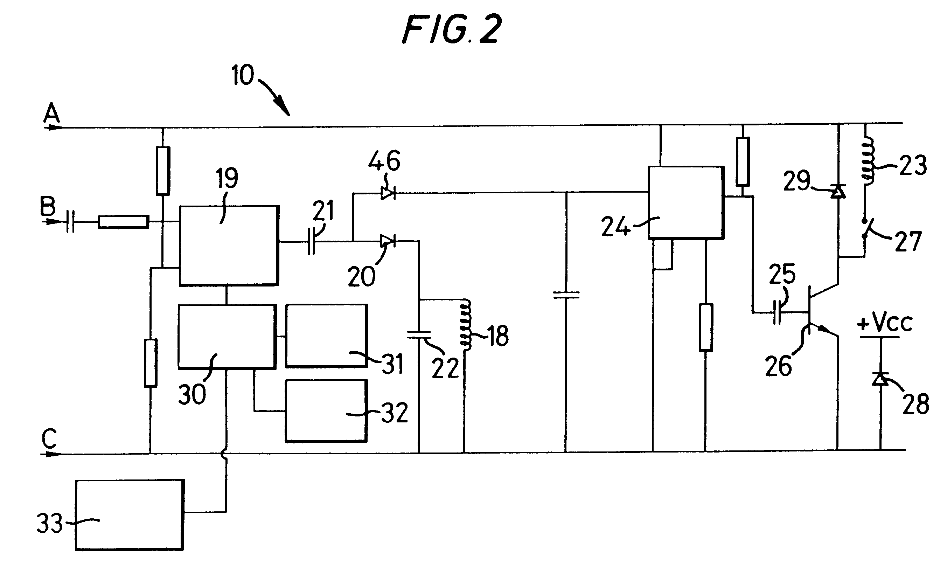

The filter 14 is a first, second order, unit gain, high pass filter the output of which drives a second, second order, unity gain, high pass filter 15. Extra filters can be added further to reduce the effects of unwanted noise provided that the electrical noise contribution these will introduce does not become excessive. A further amplifier 16 provides very large amplification of the resulting signal when switch 17 is opened, but this gain is divided by 1000 when switch 17 is closed. The meter 18 (Figure 2) is calibrated to display micro-siebers or milli-siebers and the position of the switch determines which of these two ranges is selected. The output B of amplifier 16 is fed into a logarithmic amplifier unit 19. This amplifier effectively reduces the dynamic range of the input signal, thereby to accommodate a measurement ratio of 3.0 million to 0.3, and enables an inverse square law response to be obtained with a suitably calibrated meter. This response is highly preferable for fully effective simulation since it enables the user to calculate the distance which needs to be travelled in order to limit the user's exposure to a safe level. This calculation is one of the most important procedures in a real life incident.

The output of the logarithmic amplifier, A.C. coupled through capacitor 21, is half wave rectified and smoothed by a diode 20 and capacitor 22 before driving the meter 18. The smoothing provided by capacitor 22 also eliminates erratic meter movement due to any signal phase nulls which may be encountered. A further benefit of this smoothing is that it eliminates the impulse signal resulting from the clicks of a loudspeaker 23 (see below), which would otherwise register on the meter. A second unsmoothed half wave rectified output is provided via diode 46 to drive a voltage-to-frequency converter 24. This device provides a clicking output to the loudspeaker unit (which comprises a loudspeaker 23 and diode 29), the output rising in frequency as the received signal increases in strength. Capacitor 25 integrates the output signal and applies a pulse to the base of transistor 26 which amplifies and inverts this pulse to drive the loudspeaker 23 to produce clicks. The rectified signal for the converter 24 is taken via a second path to prevent the back EMF voltage from the meter causing spurious clicking whenever the received signal level drops. Switch 27 enables the user to disable the speaker for silent operation if required. Diode 28 provides protection should the battery be inserted incorrectly and prevents any damage from occurring to the circuitry. Power for the detector is provided by either primary or rechargeable battery.

The logarithmic amplifier unit 19 preferably includes a converter of the input to a DC voltage root mean square value. This value can be modified in various ways as shown in Figure 2. Thus, an offset modifier 30 to input unit 19 can receive modifying signals from, for example, an orientation detector 31, a background noise generator 32 and a distance-sensing unit 33, and deliver selected such modifying signals to the unit 19. The orientation detector would modify the signal in dependence upon the orientation of the sensor 10, the background noise generator 32 (which may be a pseudo-random level generator) can be used to generate a signal representative of background radiation and preferably this continues to be generated when the sensor is receiving airborne ultrasonic radiation, and the continuing signal is added to the received ultrasonic signal. The distance-sensing module can serve to modify the received signal in dependence upon a sensed separation distance between the sensor and a zone containing the source thereby to mimic more closely how the intensity of alpha, beta or gamma radiation actually falls off, with increasing source-sensor separation. In practice, distance is likely to be sensed relative to the ground on which the sensor is placed, rather than the sensor itself.

Alternative means by which the level of radiation may be displayed on the simulator include direct digital readout and a bar-graph type display. A bar-graph display may comprise a line or bar of light which travels up and down a calibrated scale to indicate the radiation level. Implementation of this type of display eliminates the need for any moving parts within the instrument.

With the exception of the panel-mounted components and the battery, all electronic components are mounted on a printed circuit board. Preferably, a double side board is used, the component side copper being used as an earth plane to reduce noise. All resistors are preferably of low noise type such as metal film. The filter capaciters are ceramic. All other non-polarised capaciters are polycarbonate and polarised capacitors are tantalum or electrolytic.

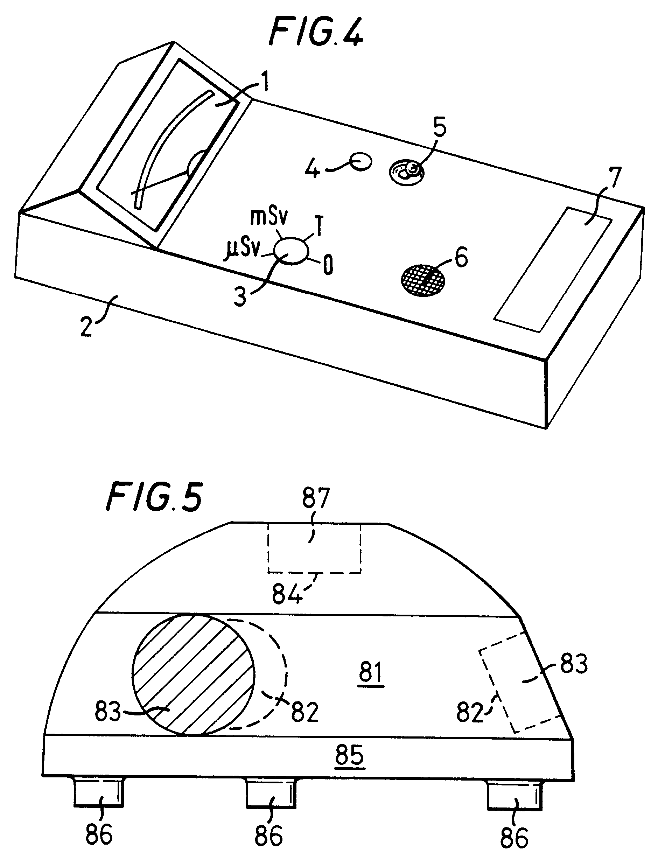

Figure 4 shows the outside of the case of the receiver 2 which houses all of the electronics. The meter movement 1 is set at an angle to provide for easier viewing. Rotary switch 3 selects one of the following functions: a) OFF (0) b) Battery test (T) c) mSv d) μ Sv. Push switch 4 illuminates the meter scale for the duration the button is held down to facilitate reading in poor light. Toggle switch 5 disables the clicking speaker 6 if required for covert measuring. The illustrated receiver includes as an additional feature a maximum exposure time table 7.

Illumination can be provided to enable the meter to be read in poor light, and the receiver includes a backlight, which is switchable so as to conserve battery power.

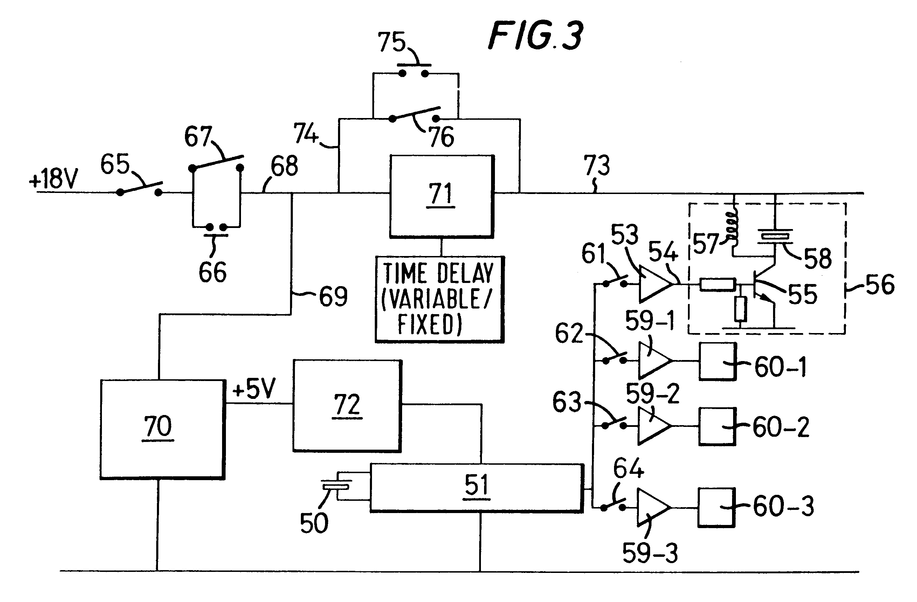

Referring now to Figure 3, the source of safe radiation is capable of a number of operational methods, some of which are described below. Essentially, the simulation sources produce a high power ultrasound signal. The frequency of this source is crystal-controlled and derives from a 6.4MHz crystal 50. A frequency divider 51 divides this frequency by 256 to provide an output signal 52 which is at a frequency of 25KHz. The output of this counter, a square wave, is amplified by a drive amplifier 53 and its output 54 drives a transistor 55 which in turn drives a tuned circuit comprising a reactance 57 and a transducer 58 which generates the air-borne ultrasonic emission. This parallel tuned circuit 56 results in a very high voltage (approx 50 volts) being developed across the transducer thus producing a very high sound pressure level output.

Shown in Figure 3 are a further three amplifiers 59-1,2,3 identical with amplifier 53, and a further three tuned circuits 60-1,2,3 identical with the tuned circuit 56, to provide four indentical emitting transducers. Each of these may be individually actuated by its own control switch 61,62,63 and 64, respectively.

Voltage supply to the emitters is controlled by a number of elements. An on-off switch 65 is located between the voltage source 66 and the emitting circuitry generally. For initiating the emission when a particular event takes place a switch 66 is provided, the switch being closed by the event in question but an over-ride 67 can be used to bypass the switch 66. In one application, the switch 66 could be closed by a movement in equipment undergoing a simulated maintenance or repair procedure, the intention being to simulate radioactive emission consequent upon an incorrect manipulation of the equipment. The supply 68 downstream of the switch 66 is delivered 69 to a voltage regulator 70 and to a variable power control 71. The regulator 70 delivers a steady supply voltage (5v.) to the divider 51 via a time delay unit 72, which when actuated serves to delay the start of ultrasonic emission.

The variable power control 71 supplies the tuned circuits 56, 60-1,2,3 from a line 73. In parallel with it is a line 74 which carries a switch 75 and parallel override switch 76. This arrangement can be used to simulate (by closure of the switch) upsetting of a container which is carrying radioactive material leading to immediate full scale emission of radiation. A time delay 77, arranged to delay the start of a non-zero output from the control 78, is useful to simulate a change from an initially safe, radiation-free situation to one in which there is a radiation problem.

A major enhancement to system performance can be achieved by frequency modulating the source. This minimises the possibility of standing waves being set up within an enclosed test environment, in that the constantly changing frequency reduces the probability of any two meeting waves from being able to cancel or add.

Realistic training is provided by using the illustrated time delay mechanisms, such that the source initially emits a low level of signal which increases to full power once the programmed time delay has lapsed, thereby simulating a sudden increase in radioactive hazard. A further option is to configure the source such that the output is zero until a pre-set time elapses where upon full power is emitted, thereby to simulate the effects of damage to an otherwise safe radiation source. A combination of both the delayed turn-on and delayed power increase may also be appropriate. The tilt switch 76 can be used to simulate a sudden leak or a sudden increase of leak caused by moving a source too quickly.

The power supply for the source can be a rechargeable battery, replaceable by a dry cell should it be necessary. Provision may also be made for a charging unit to be used to power the source from the mains if so desired.

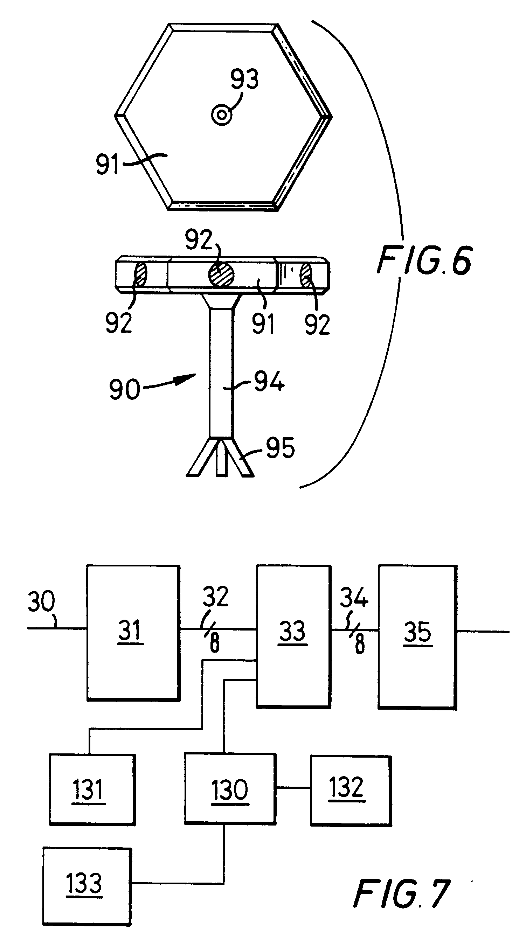

The components of the illustrated simulation source are assembled on a printed circuit board which may be single-sided or a double-sided depending on the degree of miniaturisation required. The shape of the case containing the board is determined by the nature of the training for which the source is required. Figure 5 shows one preferred construction which resembles an upturned bowl 81 with 3 recesses 82 equidistant around the circumference each to accommodate one transducer 83. A fourth recess 84 on top of the unit accepts another transducer to provide near omni-directional propagation. A single transducer mounted in a suitable case is in general less satisfactory because the field of its radiation emission is restricted. A single transducer source may be, however, installed within a case to simulate, by means of a break in the case, a leaking radioactive container flask.

The Figure 5 part-spherical source has three transducers 83 mounted at an angle relative to the vertical so as to ensure the maximum possible sonic energy is radiated into the search zone. An optimum angle of offset (2.8°) may be calculated by assuming a detection range of 20 metres on a flat plate with the source on the ground and the sensor one metre up from the ground.

The base section 85 of the case 81 of the source is removable to allow access to the electronics and battery within. On/off switch and option programme controls are also located on the underside base 85. Three feet 86 underneath the base 85 protect these controls from damage. An optional fourth transducer 87 may be fitted on the top of the unit if desired to improve coverage.

Figure 6 illustrates an alternative source housing 90 particularly suited for outdoor use. The head 91 of the assembly is hexagonal in shape and a transducer 92 is mounted on each face. Each transducer 92 is mounted vertically without any offset angle. A spirit level bubble 93 is mounted on the top of the head 91 to facilitate siting. This is important if an even 360 degrees field of sonic propagation is to be achieved. Access to the control electronics is on the underside of the head 91. A direction switch (not shown) enables specific ones of the six transducers to be enabled or disabled thus controlling the direction of the sonic transmission to simulate the effect of wind currents on a cloud of radioactive dust, in that the relative strength of the source will appear different depending on the angle of approach. In a preferred embodiment, the power output from at least some of the six transducers is independently settable.

The stem 94 of the housing 90 enables the head 91 to clear any grass or low shrubs which may be present. The legs 95 support the device and keep it stable.

Figure 7 shows a modification of part of the circuit of Figure 2, namely the part containing the logarithmic amplifier, 19, useful in calibrating the meter. The amplified input 30 is delivered to an analogue-to-digital converter 31, the digital output 32 of which is delivered to a memory device 33. Particular locations are addressed in dependence upon amplitudes of the inputted digital signals, and the contents of each of these memory locations are fixed empirically, as in the process of calibration of the meter described earlier in this specification. The contents of the addressed locations determine the amplitude of the output signals 34 from the memory device 33. These signals are then converted at a digital-to-analogue converter 35.

Optionally (and for example as shown in Figure 7) the output signals 34 can be modified (broadly as mentioned above in relation to Figure 2) by the operation of an orientation sensor 131, background level generator 132 and distance detecting module 133, through an offset modifier 130.

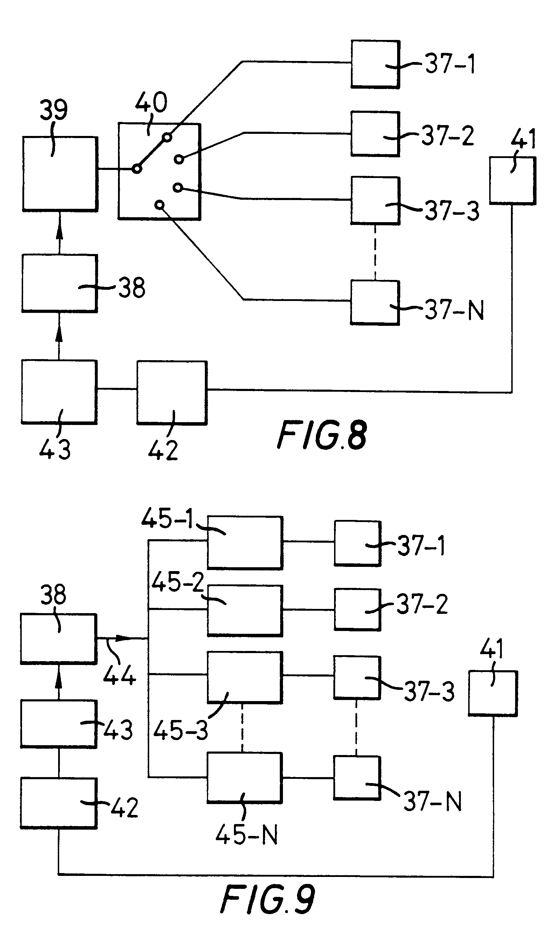

Figure 8 depicts a system of panels 37-1,N each containing an ultrasound emitter as described above. A computer 38 drives an oscillator 39 which powers each emitter through a time division multiplexer 40. The computer is programmed to achieve a desired pattern of emission that is, output power from each transducer, by the use of a sensor 41 incident ultrasonic radiation to feed back data to the computer 38 (conveniently via a high pass filter 42 and analogue-to-digital converter 43).

Figure 9 shows an alternative scheme of frequency division multiplexing in which the computer output 44 controls the output amplitude of individual oscillators 45-1,N each with its own characteristic frequency and each driving a respective one of the emitting transducers 37-1,N.

An efficient method of achieving high power output from the source transducers is electrically to pulse the transducers with bursts of the signal at the appropriate frequency.

As an alternative to the above-mentioned crystal-controlled oscillator source, there can be used a high stability voltage-controlled oscillator operating at the selected frequency.

Where, in the above description, the expression "field strength" is used in the contect of ultrasonics, it is to be taken as a reference to "sound pressure".

## Claims

1. A training aid to simulate a radioactive source and detector of radioactivity and comprising a source of air-borne radiation and a detector of said radiation, which detector comprises transducer means to convert air-borne radiation incident thereon into an electrical signal, an amplifier of said electrical signal which provides an output which varies with the field strength of the incident radiation and an output element which generates an audible or visual output signal to indicate a field strength of the radiation incident upon the detector, characterised in that said radiation is ultrasonic radiation.

2. A training aid as claimed in claim 1 and characterised in that the detector includes means to evaluate the root mean square value of the electrical signal generated by the transducer, and means to apply such value to said amplifier.

3. A training aid as claimed in claim 1 and characterised in that the amplifier is logarithmic.

4. A training aid as claimed in claim 2 and characterised in that the amplifier is logarithmic.

5. A training aid as claimed in any one of the preceding claims wherein the transducer means is piezo-electric.

6. A training aid as claimed in any one of claims 1 to 4 wherein the transducer means comprises a plurality of discrete transducer elements.

7. A training aid as claimed in any one of claims 1 to 4 characterised in that the ultrasonic source includes means to modulate the frequency of the radiation which it emits.

8. A training aid as claimed in any one of claims 1 to 4 characterized in that the ultrasonic source includes means to delay the commencement of emission of a normal intensity of radiation.

9. A training aid as claimed in claim 8 characterized in that the delay means comprises a switch which closes (to initiate normal intensity emission) upon the happening of some pre-selected manipulation event.

10. A training aid as claimed in claim 8 characterized in that the delay means comprises a timing device which closes a switch (to initiate normal intensity emission) only after a preset time has elapsed.

11. A training aid as claimed in claim 8 characterized in that the delay means causes the intensity of emission of ultrasonic emission to remain at a relatively low level for a predetermined period of time and only then rise to said normal intensity.

12. A training aid as claimed in any one of claims 1 to 4 characterized in that the source comprises a plurality of discrete transducers arranged at an angle to each other.

13. A training aid as claimed in claim 12 wherein the transducers are arranged to be equally spaced on the surface of a cap of a sphere and outwardly directed.

14. A training aid as claimed in claim 12 wherein the transducers are arranged evenly on the faces of a regular polygon.

15. A training aid as claimed in claim 12 characterized by a spirit level to facilitate arrangement of the source with the transducers horizontally level with each other.

16. A training aid as claimed in claim 12 and characterized by means to alter the directionality of radiation emission by selectively controlling the input to individual ones of the transducers.

17. A training aid as claimed in any one of claims 1 to 4 characterized by means to activate the ultrasonic source which results in a pulsed emission of ultrasonic radiation therefrom.

18. A training aid as claimed in any one of claims 1 to 4 characterized in that the detector includes a proximity sensing device for modifying the output signal in dependence upon the sensed proximity of the device to a source zone.

19. A training aid as claimed in claim 18 to simulate the radiation associated with ground-based radioactive fallout wherein the proximity sensing device has a modifying effect on the output signal which increases, with decreasing proximity to the ground, up to a predetermined critical distance above the ground beyond which its effect is to zero the output signal.

20. A training aid as claimed in any one of claims 1 to 4, characterized in that the detector includes a background noise generator for generating an electrical signal which generates at the output element an output signal representative of a background field strength of radiation.

21. A method of developing safety procedures against radioactivity which involves the use of equipment to simulate radioactive emission and detection, characterized in that the said equipment emits and detects ultrasonic radiation.

22. A method according to claim 21 characterized by the step of integrating levels of ultrasonic radiation received at a detector in order to indicate a dose of radiation incident on the detector.

**Patentansprüche**

1. Ausbildungshilfe zum Simulieren einer radioaktiven Quelle und eines Radioaktivitätsdetektors mit einer Quelle von Luftstrahlung und einem Detektor für besagte Strahlung, der Wandlermittel zum Umwandeln der auf ihn einfallenden Luftstrahlung in ein elektrisches Signal umfaßt, einem Verstärker des besagten elektrischen Signals, der eine Ausgabe bereitstellt, die sich mit der Feldstärke der einfallenden Strahlung verändert, und einem Ausgangselement, das ein akustisches oder optisches Ausgangssignal erzeugt, um eine Feldstärke der auf den Detektor einfallenden Strahlung anzuzeigen, dadurch gekennzeichnet, daß die besagte Strahlung Ultraschallstrahlung ist.

2. Ausbildungshilfe nach Anspruch 1, dadurch gekennzeichnet, daß der Detektor Mittel zum Auswerten des Effektivwerts des vom Wandler erzeugten elektrischen Signals und Mittel zum Anlegen dieses Wertes an den besagten Verstärker enthält.

3. Ausbildungshilfe nach Anspruch 1, dadurch gekennzeichnet daß der Verstärker logarithmisch ist.

4. Ausbildungshilfe nach Anspruch 2, dadurch gekennzeichnet, daß der Verstärker logarithmisch ist.

5. Ausbildungshilfe nach einem der vorhergehenden Ansprüche, wobei das Wandlermittel piezoelektrisch ist.

6. Ausbildungshilfe nach einem der Ansprüche 1 bis 4, wobei das Wandlermittel eine Mehrzahl von diskreten Wandlerelementen umfaßt.

7. Ausbildungshilfe nach einem der Ansprüche 1 bis 4, dadurch gekennzeichnet, daß die Ultraschallquelle Mittel zum Modulieren der Frequenz der von ihr abgegebenen Strahlung enthält.

8. Ausbildungshilfe nach einem der Ansprüche 1 bis 4, dadurch gekennzeichnet, daß die Ultraschallquelle Mittel zum Verzögern des Abgabebeginns einer normalen Strahlungsintensität enthält.

9. Ausbildungshilfe nach Anspruch 8, dadurch gekennzeichnet, daß das Verzögerungsmittel einen Schalter umfaßt, der sich bei Eintreten eines beliebigen vorgewählten Handhabungsereignisses schließt (um Ausstrahlung mit normaler Intensität einzuleiten).

10. Ausbildungshilfe nach Anspruch 8, dadurch gekennzeichnet, daß das Verzögerungsmittel eine Zeitgabevorrichtung umfaßt, die einen Schalter nur nach Ablauf einer voreingestellten Zeit schließt (um Ausstrahlung mit normaler Intensität einzuleiten).

11. Ausbildungshilfe nach Anspruch 8, dadurch gekennzeichnet, daß das Verzögerungsmittel bewirkt, daß die Ausstrahlungsstärke der Ultraschallausstrahlung eine vorbestimmte Zeitdauer lang auf einem verhältnismäßig niedrigen Pegel bleibt und nur dann auf die besagte normale Intensität ansteigt.

12. Ausbildungshilfe nach einem der Ansprüche 1 bis 4, dadurch gekennzeichnet, daß die Quelle eine Mehrzahl von im Winkel zueinander angeordneten diskreten Wandlern umfaßt.

13. Ausbildungshilfe nach Anspruch 12, wobei die Wandler gleich beabstandet auf der Oberfläche einer Kappe einer Kugel und nach außen gerichtet angeordnet sind.

14. Ausbildungshilfe nach Anspruch 12, wobei die Wandler gleichmäßig auf den Flächen eines regelmäßigen Vielecks angeordnet sind.

15. Ausbildungshilfe nach Anspruch 12, gekennzeichnet durch eine Wasserwaage zum Erleichtern der Anordnung der Quelle mit horizontal eben zueinander angeordneten Wandlern.

16. Ausbildungshilfe nach Anspruch 12, gekennzeichnet durch Mittel zum Ändern der Bündelung der Strahlungsabgabe durch gezieltes Steuern der Eingabe in einzelne der Wandler.

17. Ausbildungshilfe nach einem der Ansprüche 1 bis 4, gekennzeichnet durch Mittel zum Ansteuern der Ultraschallquelle, was eine gepulste Abgabe von Ultraschallstrahlung aus dieser ergibt.

18. Ausbildungshilfe nach einem der Ansprüche 1 bis 4, dadurch gekennzeichnet, daß der Detektor eine Näherungsmeßvorrichtung zum Verändern des Ausgangssignals in Abhängigkeit von der gemessenen Nähe der Vorrichtung an einer Quellzone enthält.

19. Ausbildungshilfe nach Anspruch 18 zum Simulieren der mit erdgebundenem radioaktivem Niederschlag verbundenen Strahlung, wobei die Näherungsmeßvorrichtung eine Änderungswirkung auf das Ausgangssignal ausübt, die mit abnehmender Nähe zum Boden bis zu einer vorbestimmten kritischen Entfernung über dem Boden ansteigt, jenseits derer sie das Reduzieren des Ausgangssignals auf Null bewirkt.

20. Ausbildungshilfe nach einem der Ansprüche 1 bis 4, dadurch gekennzeichnet, daß der Detektor einen Untergrundrauschgenerator zum Erzeugen eines elektrischen Signals enthält, das am Aus-

gangselement ein eine Untergrund-Strahlungs-feldstärke darstellendes Ausgangssignal erzeugt.

21. Verfahren zum Entwickeln von Sicherheitsprozeduren gegen Radioaktivität, zu dem die Verwendung von Geräten zum Simulieren von radioaktiver Ausstrahlung und Erkennung gehört, dadurch gekennzeichnet, daß die besagten Geräte Ultraschallstrahlung abgeben und erkennen.

22. Verfahren nach Anspruch 21, gekennzeichnet durch den Schritt des Integrierens von an einem Detektor empfangenen Ultraschallstrahlungspegeln zum Anzeigen einer Dosis von auf den Detektor einfallender Strahlung.

## Revendications

1. Aide à la formation pour simuler une source radioactive et un détecteur de radioactivité et comprenant une source de rayonnement dans l'air et un détecteur dudit rayonnement, lequel détecteur comprend un moyen transducteur pour convertir le rayonnement dans l'air incident sur le détecteur en un signal électrique, un amplificateur dudit signal électrique qui fournit une sortie qui varie avec la force de champ du rayonnement incident et un élément de sortie qui génère un signal de sortie sonore ou visuel pour indiquer une force de champ du rayonnement incident sur le détecteur, caractérisé en ce que ledit rayonnement est un rayonnement ultrasonore.

2. Aide à la formation selon la revendication 1 et caractérisé en ce que le détecteur comporte un moyen pour évaluer la valeur de la racine carrée du signal électrique généré par le transducteur, et un moyen pour appliquer cette valeur audit amplificateur.

3. Aide à la formation selon la revendication 1 et caractérisé en ce que l'amplificateur est logarithmique.

4. Aide à la formation selon la revendication 2 et caractérisé en ce que l'amplificateur est logarithmique.

5. Aide à la formation selon l'une quelconque des revendications précédentes, dans lequel le moyen transducteur est piézoélectrique.

6. Aide à la formation selon l'une quelconque des revendications 1 à 4, dans lequel le moyen transducteur comprend une pluralité d'éléments transducteurs discrets.

7. Aide à la formation selon l'une quelconque des revendications 1 à 4, caractérisé en ce que la source ultrasonore comporte un moyen pour moduler la fréquence du rayonnement qu'elle émet.

8. Aide à la formation selon l'une quelconque des revendications 1 à 4, dans lequel la source ultrasonore comporte un moyen pour retarder le commencement de l'émission d'une intensité normale de rayonnement.

9. Aide à la formation selon la revendication 8, caractérisé en ce que le moyen de retard comprend un commutateur qui se ferme (pour déclencher l'émission de l'intensité normale) à la manifestation d'un événement de manipulation présélectionné.

10. Aide à la formation selon la revendication 8, caractérisé en ce que le moyen de retard comprend un dispositif de minuterie qui ferme un commutateur (pour déclencher l'émission de l'intensité normale) seulement après qu'un temps préréglé se soit écoulé.

11. Aide à la formation selon la revendication 8, caractérisé en ce que le moyen de retard force l'intensité d'émission de l'émission ultrasonore à rester à un niveau relativement bas pendant une période de temps prédéterminée et seulement après à croître jusqu'à ladite intensité normale.

12. Aide à la formation selon l'une quelconque des revendications 1 à 4, caractérisé en ce que la source comprend une pluralité de transducteurs discrets disposés en angle l'un par rapport à l'autre.

13. Aide à la formation selon la revendication 12, dans lequel les transducteurs sont disposés pour être également espacés sur la surface d'une couverture d'une sphère et dirigés vers l'extérieur.

14. Aide à la formation selon la revendication 12, dans lequel les transducteurs sont disposés uniformément sur les faces d'un polygone régulier.

15. Aide à la formation selon la revendication 12, caractérisé par un niveau à bulle pour faciliter la disposition de la source avec les transducteurs horizontalement à niveau l'un avec l'autre.

16. Aide à la formation selon la revendication 12 et caractérisé par un moyen pour modifier la directivité de l'émission de rayonnement en commandant sélectivement l'entrée vers certains transducteurs individuels.

**17.** Aide à la formation selon l'une quelconque des revendications 1 à 4, caractérisé par un moyen pour activer la source ultrasonore qui résulte en une émission pulsée de rayonnement ultrasonore à partir de ce moyen.

**18.** Aide à la formation selon l'une quelconque des revendications 1 à 4, caractérisé en ce que le détecteur comporte un dispositif de détection de proximité pour modifier le signal de sortie en fonction de la proximité détectée du dispositif par rapport à une zone de source.

**19.** Aide à la formation selon la revendication 18 pour simuler le rayonnement associé aux retombées radioactives au sol dans lequel le détecteur de détection de proximité a un effet modificateur sur le signal de sortie qui augmente, avec la diminution de la proximité par rapport au sol, jusqu'à une distance critique prédéterminée au-dessus du sol au-delà de laquelle son effet est d'annuler le signal de sortie.

**20.** Aide à la formation selon l'une quelconque des revendications 1 à 4, caractérisé en ce que le détecteur comporte un générateur de bruit de fond pour générer un signal électrique qui génère à l'élément de sortie un signal de sortie représentatif d'une force de champ de rayonnement de fond.

**21.** Méthode d'élaboration de procédures de sécurité contre la radioactivité qui implique l'utilisation de matériel pour simuler l'émission et la détection radioactives, caractérisée en ce que ledit matériel émet et détecte un rayonnement ultrasonore.

**22.** Méthode selon la revendication 21, caractérisée par l'étape d'intégration des niveaux de rayonnement ultrasonore reçus à un détecteur pour indiquer une dose de rayonnement incident sur le détecteur.

# FIG.1

*FIG.2*

EP 0 403 562 B1

# FIG.3

TIME DELAY (VARIABLE/FIXED)

+18V

+5V

EP 0 403 562 B1

## FIG.4

## FIG.5

*FIG.6*

*FIG.7*

FIG.8

FIG.9